# EUROPEAN PATENT APPLICATION

(11) **EP 1 167 873 A1**
(43) Date of publication of application: **02.01.2002**
(21) Application number: 01112960.8
(22) Date of filing: 07.06.2001
(51) Int. Cl.: F21V 8/00

(54) **Light pipe for a projector system**

(30) Priority: 30.06.2000 CN 00118467
(71) Applicant: Acer Communications and Multimedia Inc., Kweishan, Taoyuan (TW)
(72) Inventor: Chen, Jung-Yao, Acercommunication & Mulitmedia Inc, Kweishan, Taoyuan Taiwan (CN)
(74) Representative: Bauer, Robert, Dipl.-Ing.

(57) **Abstract**

A light pipe (40) is designed for a projector system (42). The light pipe (40) gathers the light from a light source (44) and guides the gathered light to an image device (48) in the projector system (42). The area of the exit pupil (52) of the light pipe (40) is smaller than the area of the entrance pupil (50), and the shape of the exit pupil (52) is scaled from that of the entrance pupil (50). This improves the light gathering efficiency of the light pipe (40).

## Description

The present invention relates to a light pipe according to the pre-characterizing clause of claim 1.

Light pipe is used in a projector system for gathering a light from a light source and guiding the light to an image device. Generally speaking, light pipe is designed to reduce the light leaking from the light pipe while maintaining a small light angle so as to improve the light gathering efficiency and increase the light intensity.

One of the prior art light pipes has a uniformly rectangular shape, as disclosed in U.S. patent 5,625,738. The light pipe has an entrance pupil equal to the exit pupil. Another prior art light pipe has a tapered body, as disclosed in U . S . patent 5, 625, 738. The light pipe has an exit pupil larger than an entrance pupil so that the angle of the light can be reduced.

Both the above prior art light pipes have a problem. Owing to the fact that the prior art light pipes have the entrance pupil smaller than or equal to the exit pupil, the light leaking from the light pipes is usually quite strong without increasing the volumes of the light pipes. Though an arc lamp with a longer arc length can be used as the light source to reduce the incident angle, it also makes the position distribution of the light smoother. Then the light leaking from the prior art light pipes increases, degrading the light gathering efficiency.

This in mind, the present invention aims at providing a corresponding light pipe having an exit pupil with a shape that is scaled from the shape of the entrance pupil to increase the light gathering efficiency of the light pipe, and to improve over the disadvantages of the prior art.

This is achieved by an light pipe according to claim 1. The dependent claims pertain to corresponding further developments and improvements.

As will be seen more clearly from the detailed description following below, the claimed light pipe has four trapezoidal flat plates for forming the entrance and exit pupils. Accordingly, the light gathering efficiency of the light pipe is increased.

In the following, the invention is further illustrated by way of example, taking reference to the accompanying drawings. Thereof
Fig. 1 is the schematic diagram of the light pipe of the present invention used in a projector system.
Fig. 2 is a view of the light pipe in Fig. 1.
Fig. 3A is the position distribution of the light incident upon the entrance pupil of the prior art light pipe with uniformly rectangular shape.
Fig. 3B is the position distribution of the light incident upon the entrance pupil in Fig. 1.
Fig. 4A is the incident angle distribution of the light incident upon the entrance pupil of the prior art light pipe with uniformly rectangular shape.
Fig. 4B is the incident angle distribution of the light incident upon the entrance pupil in Fig. 1.
Fig. 5 is the angle distribution of the light leaving the light pipe in Fig. 1.
Fig. 6 is the relation between the opening ratio and the intensity of the light leaving the light pipe in Fig. 1.
Fig. 7 is the schematic diagram of the light gathering efficiency improvement of the light pipe in Fig. 1 in comparison with the prior art light pipe with uniformly rectangular shape.

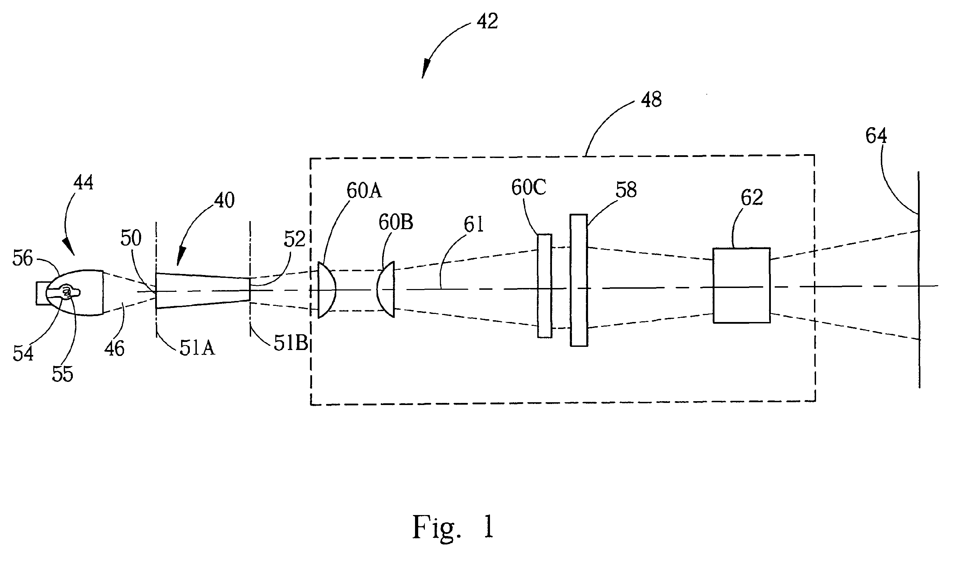

Please refer to Fig.1. Fig. 1 is the schematic diagram of a light pipe 40 of the present invention used in a projector system 42. The projector system 42 comprises a light source 44 to generate light 46 and to guide the light 46 to the light pipe 40, and an image device 48 to produce an image by projecting the light 46 gathered by the light pipe 40 to a screen 64. The light pipe 40 is set between the light source 44 and the image device 48, and the projector system 42 is a projector or a liquid crystal display (LCD).

As shown in Fig.1, the light source 44 comprises an arc lamp 54 to generate light 46, and a light collector 56, which is a lampshade in the shape of a half ellipsoid, to collect the light 46 generated by the arc lamp 54 and guide the light 46 to the light pipe 40. The arc lamp 54 is a hyper pressure mercury arc light with a long arc length 55 (Ushio, 150W, NSH150), the arc length 55 being around 1.8 mm (0.0709 inches).

The image device 48 comprises a display panel 58 set on an image path 61, a plurality of optic lenses 60A, 60B and 60C set between the light pipe 40 and the display panel 58, and a projection lens 62. The lenses 60A, 60B and 60C are used to guide the light 46 collected by the light pipe 40 to the display panel 58 to form the image. The projection lens 62 is set between the display panel 58 and the screen 64 to project the image to the screen 64.

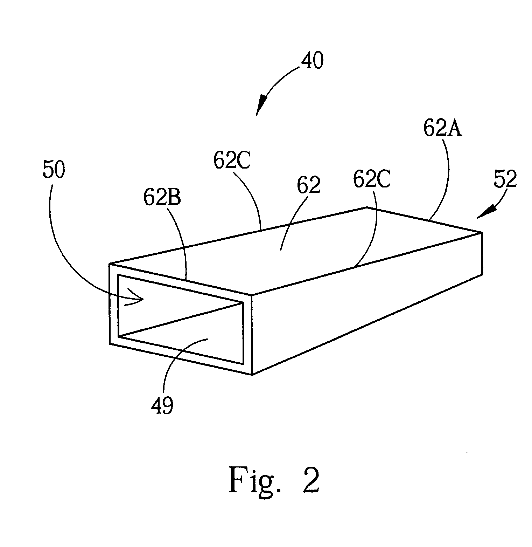

Please refer to Fig.2. Fig. 2 is a perspective view of the light pipe 40 in Fig. 1. The light pipe 40 is a hollow, tapering pipe constructed with four trapezoidal flat plates 62. Each of the trapezoidal flat plates 62 comprises a top end 62A, a bottom end 62B, and two sides 62C. The sides 62C of the trapezoidal flat plates 62 are joined together to from the light pipe 40. The light pipe 40 further comprises four reflector walls (mirror coatings) 49 respectively set on the inner surfaces of the four trapezoidal flat plates 62 to reflect the light 46 to the image device 48. The reflector walls 49 absorb the infrared light in the light 46 and reflect the visible portion of the light 46.

As shown in Fig.1 and 2, the light pipe 40 comprises an entrance pupil 50 and an exit pupil 52. The entrance pupil 50 at one end of the light pipe 40 is a rectangular opening formed by the four bottom ends 62B of the four trapezoidal flat plates 62. The exit pupil 52 at another end of the light pipe 40 is a rectangular opening formed by the four top ends 62A of the four trapezoidal flat plates 62. The light 46 generated by the light source 44 is guided to the light pipe 40 through the entrance pupil 50, and the light 46 gathered by the light pipe 40 is guided to the image device 48 through the exit pupil 52. The area of the exit pupil 52 of the light pipe 40 is smaller than the area of the entrance pupil 50, and the opening shape of the exit pupil 52 is scaled from the opening shape of the entrance pupil 50. The ratio of the size of the entrance pupil 50 to the size of the exit pupil 52 is defined as the opening ratio P. In the preferred embodiment, the length of the light pipe 40 is 25mm (0.98425 inch), the ratio of length to width for both the entrance pupil 50 and the exit pupil 52 is 4/3 or 16/9, and the opening ratio P of the light pipe 40 is about 1.25 to 1.35.

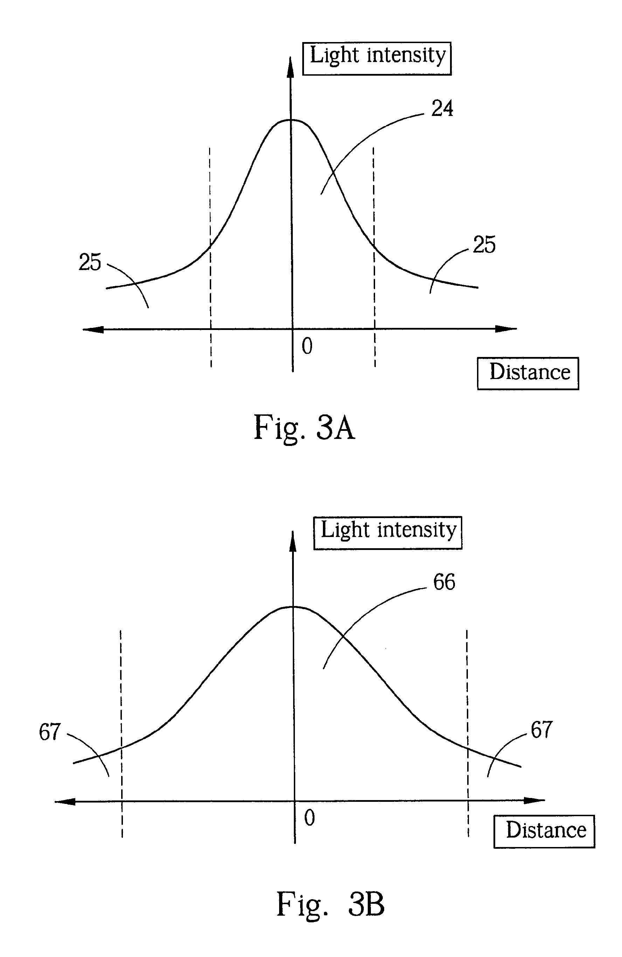

Please refer to Fig.3A and Fig.3B. Fig.3A is the position distribution of the light incident upon the entrance pupil of the prior art light pipe with uniformly rectangular shape. Fig.3B is the position distribution of the light incident upon the entrance pupil 50 in Fig. 1. As in Fig. 3A, Fig. 3B is plotted with the transverse axis being a distance on a plane 51A from the center of the entrance pupil 50, and the longitudinal axis being the light intensity. As shown in Fig.3B, the light pipe 40 of the present invention gathers more light 66 and leaks less light 67 in spite of the smoother light position distribution of the arc lamp 54 in comparison with Fig. 3A. Because the entrance pupil 50 of the light pipe 40 of the present invention is larger than the exit pupil 52, and the shape of the entrance pupil 52 is scaled from that of the exit pupil 50, the light gathering efficiency of the present invention is increased.

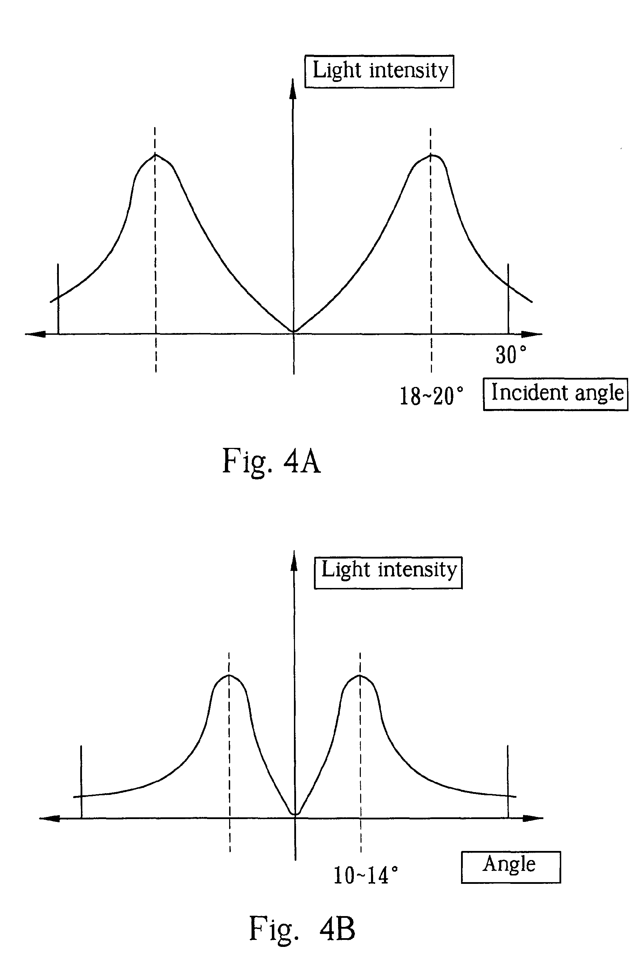

Please refer to Fig.4A and Fig.4B. Fig.4A is an incident angle distribution of the light incident upon the entrance pupil of the prior art light pipe with uniformly rectangular shape. Fig.4B is an incident angle distribution of the light incident upon the entrance pupil 50 in Fig.1. As in Fig.4A, Fig.4B is plotted with the transverse axis being the incident angle of light on the plane 51A, and the longitudinal axis being the light intensity. As shown in Fig.4B, the incident angle of the light concentrates in the 10-14 degree range because the hyper pressure mercury light with a long arc length (Ushio, 150W, NSH150) is used in the preferred embodiment.

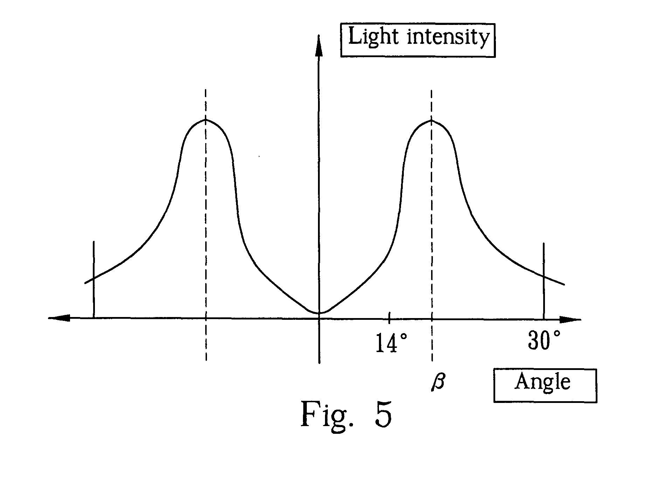

Please refer to Fig.5. Fig.5 is the angular distribution of the light leaving the light pipe 40 in Fig.1. In Fig.5, the transverse axis is the angle of the light on a plane 51B, and the longitudinal axis is the light intensity. As shown in Fig. 5, the angular distribution is concentrated at β. Though β is larger than 14 degrees, it is far less than 30 degrees. Thus, the limitation of the incident angle for the display panel 58 is satisfied.

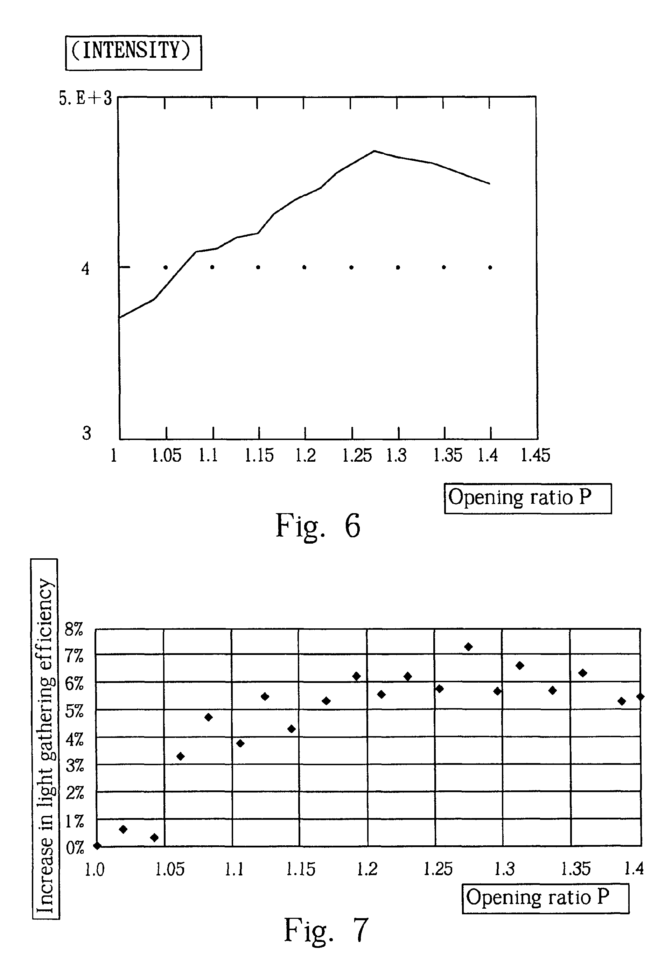

Please refer to Fig.6. Fig.6 is the relation between the intensity of the light leaving the light pipe 40 in Fig.1 and the opening ratio P. Fig.6 shows the simulated result of the light pipe 40 of the present invention using optic simulation software. The transverse axis of Fig.6 is the opening ratio P, which is the ratio of the size of the entrance pupil 50 to the size of the exit pupil 52, and the longitudinal axis is the intensity of the effective light leaving the light pipe 40. As the opening ratio P increases, the light pipe 40 gathers more light and the light leaving the light pipe 40 is more intense. However, the opening ratio P cannot be increased without limitation, or the angle of the light leaving the light pipe 40 becomes too large to be modulated by the display panel 58. As shown in Fig.6, the effective light leaving the light pipe 40 becomes most intense when the opening ratio P is about 1.25~1.35, and therefore the light pipe 40 has the highest light gathering efficiency.

Please refer to Fig.7. Fig.7 is a graph of the improvement in the light gathering efficiency of the light pipe 40 in Fig.1 in comparison with the prior art light pipe with uniformly rectangular shape. The transverse axis of Fig.7 is the opening ratio P, and the longitudinal axis is the percentage improvement of the intensity of the light leaving the light pipe 40 in comparison with that leaving the light pipe 10, that is, the percentage improvement of the light gathering efficiency. As shown in Fig.7, when the opening ratio reaches 1.1, there is an obvious 4% improvement. When the opening ratio P becomes 1.25~1.35, the light intensity of the light pipe 40 of the present invention increases 6~7% in comparison with that of the prior art light pipe 10. It is obvious, then, that the light pipe 40 of the present invention has a higher light gathering efficiency than the prior art light pipe.

In the above-cited embodiment, the length of the light pipe 40 is 25 mm (0.98425 inches) and the arc length of the arc lamp 54 is 1.8 mm (0.0709 inches). In fact, the structure of the present invention can be used to optimize the light gathering efficiency by calculating the optimal opening ratio P for given light source characteristics, light collector, length of the light pipe and the arc length, etc.

In general, this invention provides a light pipe formed from four trapezoidal flat plates. The area of the exit pupil is smaller than that of the entrance pupil, and the shape of the exit pupil is scaled from that of the entrance pupil. Therefore, the light gathering efficiency of the light pipe of the present invention is increased within a limited space. Optic simulation software shows that the intensity of the light leaving the light pipe of the present invention is higher than that of the prior art light pipe.

## Claims

1. A light pipe (40) for a projection system (42), the projection system (42) comprising a light source (44) to generate light and to guide the light to the light pipe (40), and an image device (48) to generate an image using the light gathered by the light pipe (40), the light pipe (40) being a hollow tapering pipe set between the light source (44) and the image device (48)
**Characterized in that** the light pipe (40) comprising:
four trapezoidal flat plates (62), each of the trapezoidal flat plates (62) having a top end (62A), a bottom end (62B) and two sides (62C), the sides of the trapezoidal flat plates (62) being joined together to form the light pipe (40);
an entrance pupil (50) located at one end of the light pipe (40), the entrance pupil (50) formed by the four bottom ends (62B) of the four trapezoidal flat plates (62), the light generated by the light source (44) being guided to the light pipe (40) through the entrance pupil (50); and
an exit pupil (52) located at another end of the light pipe (40), the exit pupil (52) formed by the four top ends (62A) of the four trapezoidal flat plates (62), the light gathered by the light pipe (40) being guided to the image device (48) through the exit pupil (52);
wherein the area of the exit pupil (52) is smaller than that of the entrance pupil (50), and the shape of the exit pupil (52) is scaled from that of the entrance pupil (50) so as to increase the light gathering efficiency of the light pipe (40).

2. The light pipe (40) of claim1 wherein the ratio of length to width for both the entrance pupil (50) and the exit pupil (52) is 4/3.

3. The light pipe (40) of claim 1 wherein the ratio of length to width of both the entrance pupil (50) and the exit pupil (52) is 16/9.

4. The light pipe (40) of claim 1 further comprising four reflector walls (49) respectively set on the inner sides of the four trapezoidal flat plates (62) to reflect the visible portion of the light.

5. The light pipe (40) of claim 1 wherein the light source (44) of the projection system (42) comprises:
an arc lamp (54) for generating the light; and
a collector (56) for gathering the light generated by the arc lamp (54) and guiding the light to the entrance pupil (50).

6. The light pipe (40) of claim 5 wherein the arc length of the arc lamp (54) is about 1.8mm (0.0709 inch)

7. The light pipe (40) of claim 6 wherein the length of the light pipe (40) is about 25mm (0.98425 inch).

8. The light pipe (40) of claim 7 wherein the ratio of the size of the entrance pupil (50) to the size of the exit pupil (52) is 1.1~1.35 so as to optimize the light gathering efficiency of the light pipe (40).

9. The light pipe (40) of claim 1 wherein the image device (48) of the projection system (42) comprises:
a display panel (58) set on an light imaging path (61);
plurality of optic lenses (60A, 60B, 60C) set between the light pipe (40) and the display panel (58) to guide the light gathered by the light pipe (40) to the display panel (58) to form the image; and
a projection lens (62) set between the display panel (58) and a screen (64) to project the image onto the screen (64).

10. The light pipe (40) of claim 1 wherein the projection system (42) is a projector or a liquid crystal display (LCD).
